# EUROPEAN PATENT APPLICATION

(11) **EP 1 551 075 A1**
(43) Date of publication of application: **06.07.2005**
(21) Application number: 03798455.6
(22) Date of filing: 22.09.2003
(51) Int. Cl.: H01M 14/00, H01L 31/04, H01B 1/12

(54) **DYE-SENSITIZED SOLAR CELL**

(30) Priority: 25.09.2002 JP 2002279855; 25.09.2002 JP 2002279884
(71) Applicant: Sharp Corporation, Osaka-shi, Osaka 545-8522 (JP); DAI-ICHI KOGYO SEIYAKU CO., LTD., Shimogyo-ku Kyoto 600-8873 (JP)
(72) Inventor: KOMIYA, Ryoichi, Kashiba-shi, Nara 639-0225 (JP); YAMANAKA, Ryohsuke, Gojo-shi, Nara 637-0014 (JP); HAN, Liyuan, Kitakatsuragi-gun, Nara 635-0833 (JP); MITATE, Takehito, Yamatotakada-shi, Nara 635-0075 (JP); ISHIKO, Eriko, Kyoto-shi, Kyoto 615-8018 (JP); KONO, Michiyuki, Neyagawa-shi, Osaka 572-0082 (JP)
(74) Representative: Strehl Schübel-Hopf & Partner
(86) International application number: PCT/JP2003/012115
(87) International publication number: WO 2004/030139

(57) **Abstract**

Provided is a dye-sensitized solar cell having improved stability of safety and performance by employing a non-volatile molten salt which makes it possible to facilitate the control over the composition of gel electrolyte, simplify the working step during production and give an excellent conversion efficiency. The dye-sensitized solar cell comprises a transparent substrate, a transparent electrically-conductive membrane formed on the surface of the transparent substrate and an electrically-conductive substrate disposed opposed to the transparent electrically-conductive membrane and further comprises a porous semiconductor layer having a dye adsorbed thereto and an electrolyte provided interposed between the aforesaid transparent electrically-conductive membrane and the electrically-conductive substrate, wherein the electrolyte comprises a molten salt incorporated in a network structure obtained by crosslinking at least one kind of Compound A having isocyanate group with at least one kind of Compound B having amino group to solve the aforesaid problems. Or the electrolyte comprises a molten salt incorporated in a network structure obtained by crosslinking at least one kind of Compound A having isocyanate group with at least one kind of Compound C having carboxyl group and/or hydroxyl group, at least one of Compound A and Compound C constituting the electrolyte has a polymer structure having a molecular weight of from 500 to 100,000 and a part or whole of the polymer structure comprises one or more selected from the group consisting of polyether, polyester, polycaprolactone, polysiloxane, polyvinylpyrrolidone, polycarbonate and polyphosphazene.

## Description

### Technical Field

The present invention relates to a dye-sensitized solar cell and more particularly to a dye-sensitized solar cell comprising an electrolyte having a molten salt incorporated in a network structure obtained by crosslinking a compound having a specific structure.

### Background Art

Dye-sensitized solar cells have been widely noted because they exhibit a high conversion efficiency among organic solar cells. As a semiconductor layer made of a photoelectric conversion material in this dye-sensitized solar cell there is used one having a spectrally-sensitized dye having absorption in the visible light range adsorbed to the surface of a semiconductor.

For example, Japanese Patent No. 2,664,194 describes a dye-sensitized solar cell comprising a metal oxide semiconductor layer having a spectrally-sensitized dye made of a transition metal complex adsorbed to the surface of a semiconductor.

Further, JP-B-8-15097 describes a dye-sensitized solar cell having a spectrally-sensitized dye layer made of a transition metal complex or the like provided on the surface of a titanium oxide semiconductor layer doped with metallic ions. Moreover, JP-A-7-249790 describes a dye-sensitized solar cell comprising a semiconductor layer for photoelectric conversion material obtained by heating an ethanol solution of a spectral sensitizer under reflux on the surface of a semiconductor.

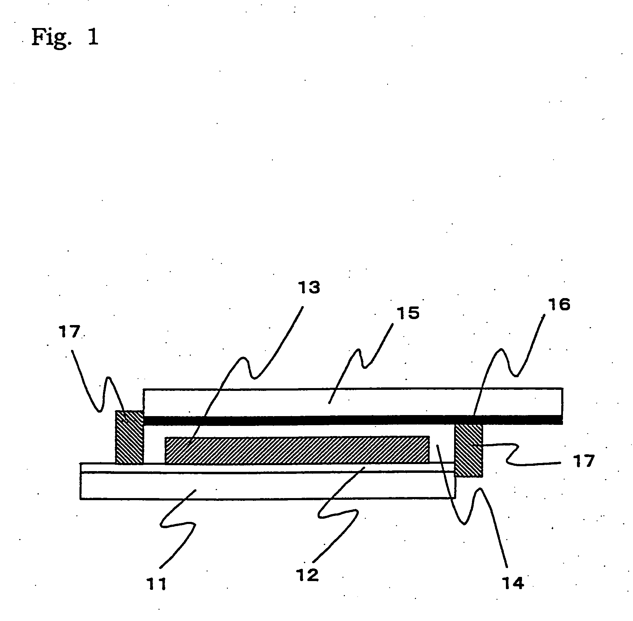

The process for the production of a dye-sensitized solar cell comprising an ordinary electrolyte will be described in connection with Fig. 1.

Fig. 1 is a diagrammatic sectional view illustrating the configuration of a conventional dye-sensitized solar cell.

Firstly, a transparent electrically-conductive membrane 12 is formed on the surface of a transparent support 11, a porous semiconductor layer 13 made of titanium oxide or the like is formed on the transparent electrically-conductive membrane 12, and a dye is then adsorbed to this porous semiconductor layer 13. Subsequently, a counter electrode 15 is coated with a catalyst such as platinum layer 16, and the transparent support 11 and the counter electrode 15 were laminated on each other in such an arrangement that the porous semiconductor layer 13 and the platinum layer 16 are opposed to each other. Further, the side of the transparent support 11 and the counter electrode 15 are sealed with an epoxy resin 17, and an electrolyte comprising an oxidation-reduction pair is then injected into the gap between them to form an electrolyte layer 14, thereby preparing a dye-sensitized solar cell. Herein, the oxidation-reduction pair is produced by mixing two or more materials and acts to move electric charge by redox reaction, and it is produced, e.g., by dissolving iodine and an iodine compound in a solvent.

However, such conventional dye-sensitized solar cells as mentioned above are disadvantageous in that the electrolyte can leak from the electrolyte layer 14, and as a means for solving the problem there is disclosed a dye-sensitized solar cell comprising a solidified electrolyte layer in JP-A-8-236165 and JP-A-9-27352. As a method of solidifying an electrolyte layer there is known the following method.

Firstly, an iodine compound (e.g., lithium iodide) is dissolved in a monomer solution obtained by dissolving a monomer represented by the general formula (1): 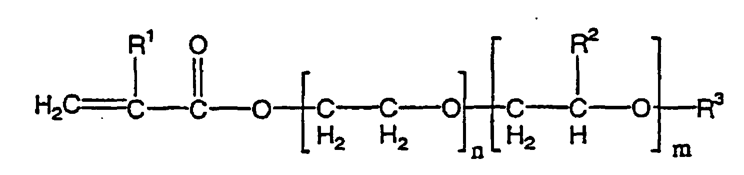 (wherein R¹ and R² each represent a hydrogen atom or methyl group; R³ represents a hydrogen atom or a lower alkyl group having one or more carbon atoms; n represents an integer of 1 or more; and m represents an integer of 0 or more, with the proviso that m/n falls within the range of from 0 to 5) in ethylene glycol. A porous semiconductor is impregnated with the solution which is then polymerized by ultraviolet ray or heat to produce a polymer compound. Thereafter, iodine is sublimated to cause doping, thereby forming a solidified electrolyte layer. Examples of other constituent materials of oxidation-reduction pair to be used in this electrolyte include iodide salt of quaternary ammonium such as alkylammonium iodide and pyridinium iodide.

Further, JP-A-2000-306605, too, discloses a polymer solid electrolyte for use in lithium ion batteries, solar cells, etc. This polymer solid electrolyte has a crosslinked structure obtained by irradiating a (poly)alkylene oxide derivative having any of ether bond, ester bond, urethane bond and carbonate bond in its molecular structure and at least one maleimide group per molecule with active energy radiation such as ultraviolet ray to cause radical polymerization.

Moreover, as one having the same oxidation- reduction pair as mentioned above there is disclosed a gel electrolyte formed by an ether compound having a specific structure and a network structure-forming compound in JP-A-2002-63813. As can be seen in the requirements that the aforementioned ether compound preferably have a low molecular weight and stay liquid at 25°C and the mixing ratio of the ether compound and the crosslinkable polymer compound be from 100 : 1 to 50 by weight, the ether compound occurs in the gel electrolyte as a solvent. On the other hand, the compound constituting a network structure has a molecular weight of from 10⁴ to 10⁷ before being crosslinked and has a reactive group such as hydroxyl group and amino group.

Further, JP-A-2000-228234 discloses a photoelectric conversion element comprising a gel electrolyte containing a product obtained by reacting a polymer having a repeating unit derived from a compound having an ethylene-like unsaturated group as a skeleton and having hydroxyl group and/or carboxyl group with an isocyanate group.

Moreover, JP-A-2000-323190 discloses a photoelectric conversion device and electrochemical cell comprising an electrolyte comprising a crosslinked polymer obtained by the reaction of a polymer compound having a nitrogen-containing heterocycle at its side chain terminal with an electrophilic agent.

However, the photoelectric conversion devices comprising a crosslinked polyether-based monomer disclosed in the above cited JP-A-8-236165, JP-A-9-27352 and JP-A-2000-306605 are disadvantageous in that since monomer crosslinking is carried out by radical polymerization, iodine to be used in the dye-sensitized solar cell, if any present in the monomer to be crosslinked, inhibits polymerization. Further, since iodine is injected after polymerization, it was made difficult to quantify the iodine concentration in the electrolyte.

Further, the gel electrolyte of JP-A-2002-63813 is disadvantageous in that it contains a low molecular uncrosslinked ether compound as a solvent and this ether compound, though having a low volatility as compared with a low boiling solvent, exhibits a low conductivity and thus causes the decrease of the conductivity of the gel electrolyte if used in a large amount. Moreover, the compound constituting a network structure contains even an extremely high molecular compound, and for example, the polyether disclosed in the examples has a molecular weight of 1,000,000 or more. When such a high molecular material is used, the uncrosslinked precursor solution can difficultly penetrate to a semiconductor layer made of TiO₂ or the like, giving a disadvantage that the semiconductor layer can be difficultly uniformly covered.

Further, the proposal of JP-A-2000-228234 has an insufficient conversion efficiency.

Moreover, the electrolyte of JP-A-2000-323190 is obtained by alkylating or quaterizing the nitrogen atom in a nitrogen-containing heterocycle with an electrophilic agent to cause ionic bond that leads to crosslinking and thus is disadvantageous in that the properties thereof change when affected by heat or light because ionic bond has a lower bonding strength than chemical bond.

The present invention has been worked out in the light of the aforementioned problems with the related art techniques and its object is to provide a dye- sensitized solar cell comprising a polymer electrolyte which has been prepared by crosslinking using chemical bond to undergo little deterioration and cause no leakage, wherein the use of a monomer which can undergo polymerization and crosslinking reaction even if iodine or the like exists therein before crosslinking makes it possible to facilitate the control over the formulation of gel electrolyte, simplify the working step during production and give an excellent conversion efficiency.

### Disclosure of the Invention

The dye-sensitized solar cell of the present invention comprises a transparent substrate, a transparent electrically-conductive membrane formed on the surface of the transparent substrate and an electrically-conductive substrate disposed opposed to the transparent electrically-conductive member and further comprises a porous semiconductor layer having a dye adsorbed thereto and an electrolyte provided interposed between the aforesaid transparent electrically-conductive membrane and the aforesaid electrically-conductive substrate, wherein the electrolyte comprises a molten salt incorporated in a network structure obtained by crosslinking at least one kind of Compound A having isocyanate group with at least one kind of Compound B having amino group to solve the aforesaid problems.

In the foregoing description, as at least one of Compound A and Compound B constituting the electrolyte there may be used one having a polymer structure having a molecular weight of from 500 to 100,000. In this case, a part or whole of the polymer structure of the aforesaid Compound A and Compound B preferably comprises one or more selected from the group consisting of polyether, polyester, polycaprolactone, polysiloxane, polyolefin, polybutadiene, polyisoprene, polycarbonate and polyphosphazene.

Or the dye-sensitized solar cell of the present invention employs an electrolyte comprising a molten salt incorporated in a network structure obtained by crosslinking at least one kind of Compound A having isocyanate group with at least one kind of Compound C having carboxyl group and/or hydroxyl group, at least one of Compound A and Compound B constituting the electrolyte has a polymer structure having a molecular weight of from 500 to 100,000 and a part or whole of the polymer structure comprises one or more selected from the group consisting of polyether, polyester, polycaprolactone, polysiloxane, polyvinylpyrrolidone, polycarbonate and polyphosphazene.

The aforesaid molten salt is preferably a salt having a melting point of lower than room temperature and/or a salt which stays liquid at room temperature.

As the molten salt there may be used one which takes part in the production of an oxidation-reduction pair.

As the molten salt there may be used one having quaternary nitrogen and/or tertiary sulfur. The quaternary nitrogen is a tetradentate nitrogen atom and the tertiary sulfur is a tridentate sulfur atom. In some detail, one having one or more selected from the group consisting of ammonium, sulfonium, heterocyclic compound and derivatives thereof as cation may be used. As the heterocyclic compound there may be used pyridinium, imidazolium, piperidinium or pyrazolium. As the anion there may be used one having iodide ion.

### Brief Description of the Drawings

Fig. 1 is a schematic sectional view illustrating the layer structure of an essential part of a conventional dye-sensitized solar cell.
Fig. 2 is a schematic sectional view illustrating the procedure of preparation of a dye-sensitized solar cell comprising the polymer electrolyte according to the present invention.

### Best Mode for Carrying Out the Invention

Compound A having an isocyanate group to be used in the present invention may be any compound having one or more isocyanate groups per molecule. In some detail, there may be exemplified (A1) aromatic isocyanates such as tolylene diisocyanate, diphenylmethane diisocyanate, naphthalene diisocyanate and xylylene diisocyanate, (A2) aliphatic isocyanates such as hexamethylene diisocyanate and trimethylhexamethylene diisocyanate and (A3) alicyclic isocyanates such as isophorone diisocyanate and cyclohexyl diisocyanate, and Compound A may be a polymer such as dimer and trimer or modification product of (A1) to (A3).

Further, (A4) adducts of low molecular alcohol and aromatic isocyanate, aliphatic isocyanate or alicyclic isocyanate, (A5) compound which is a prepolymer with a molecular weight of from 500 to 100,000 having one or more isocyanate groups obtained by previously subjecting a compound having a polymer structure and the aforesaid specific examples of isocyanate to addition reaction, etc. may be exemplified.

Herein, the compound having a polymer structure is a compound having one or more functional groups reactive with isocyanate group, preferably active hydrogen groups.

A part or whole of the polymer structure is preferably composed of polyether, polyester, polycaprolactone, polyhexamethylene carbonate, polysiloxane, polyolefin, polybutadiene, polyisoprene, polystyrene, polyvinylpyridine, polyvinyl methyl ether, polyvinyl isobutyl ether, polyacrylic acid, polymethacrylic acid, polyacrylic acid alkyl ester, polymethacrylic acid alkyl ester, polyacrylamide, polyacrylonitrile, polyvinylidene cyanide, polyvinyl acetate, polyvinyl alcohol, polyvinyl chloride, polyvinylidene chloride, polyvinyl fluoride, polyvinylidene fluoride, polytetrafluoroethylene, polyvinyl pyrrolidone, polyvinyl carbazole, polyethylene terephthalate, nylon, polyamide, polyimide, polycarbonate, polybenzimidazole, polyamine, polyimine, polysulfide, polyphosphazene or natural polymers.

Particularly preferred among these compounds are those having polyether, polyester, polycaprolactone, polysiloxane, polyolefin, polybutadiene, polyisoprene, polyacrylic acid, polymethacrylic acid, polyacrylamide, polyvinyl acetate, polyvinyl alcohol, polyvinyl pyrrolidone, polycarbonate or polyphosphazene.

Examples of the active hydrogen group include -COOH, -OH, -SH group, -NH group, -NH₂ group, -CONH₂ group, -NHCONH- group, -NHCOO- group, Na⁺[CH(COOC₂H₅)] group, -CH₂NO₂ group, -OOH group, -SiOH group, -B(OH)₂ group, -PH₃ group, etc., and preferred among these groups is -OH group.

As Compound A having an isocyanate group there may be used two or more of the aforesaid compounds in combination.

On the other hand, Compound B may be any compound having one or more amino groups per molecule and examples of such a compound include amines such as ethylenediamine, tolylenediamine, diphenylmethanediamine and diethylenetriamine. Further, examples of the compound having amino group as well as other active hydrogen groups include amino acids such as glycine and alanine, ethanolamine, and succinamino acid.

As Compound B there may be used also a compound with a molecular weight of from 500 to 100, 000 having one or more amino groups per molecule.

A part or whole of the polymer structure is preferably composed of polyether, polyester, polycaprolactone, polyhexamethylene carbonate, polysiloxane, polyolefin, polybutadiene, polyisoprene, polystyrene, polyvinylpyridine, polyvinyl methyl ether, polyvinyl isobutyl ether, polyacrylic acid, polymethacrylic acid, polyacrylic acid alkyl ester, polymethacrylic acid alkyl ester, polyacrylamide, polyacrylonitrile, polyvinylidene cyanide, polyvinyl acetate, polyvinyl alcohol, polyvinyl chloride, polyvinylidene chloride, polyvinyl fluoride, polyvinylidene fluoride, polytetrafluoroethylene, polyvinyl pyrrolidone, polyvinyl carbazole, polyethylene terephthalate, nylon, polyamide, polyimide, polycarbonate, polybenzimidazole, polyamine, polyimine, polysulfide, polyphosphazene or natural polymers.

Particularly preferred among these compounds are those having polyether, polyester, polycaprolactone, polysiloxane, polyolefin, polybutadiene, polyisoprene, polycarbonate or polyphosphazene.

As Compound B there may be used also two or more of these compounds in combination.

Next, Compound C is a compound having one or more carboxyl groups and/or hydroxyl groups per molecule.

Specific examples of the compound having carboxyl group include carboxylic acids such as hexoic acid, adipic acid, phthalic acid and azelaic acid and specific examples of the compound having hydroxyl group include alcohols such as ethylene glycol, diethylene glycol, glycerin, pentaerythritol, sorbitol and sucrose.

Alternatively, Compound C may be a compound having a polymer structure with a molecular weight of from 500 to 100, 000 having one or more carboxyl groups and/or hydroxyl groups per molecule.

A part or whole of the polymer structure is preferably composed of polyether, polyester, polycaprolactone, polyhexamethylene carbonate, polysiloxane, polyisoprene, polystyrene, polyvinylpyridine, polyvinyl methyl ether, polyvinyl isobutyl ether, polyacrylamide, polyacrylonitrile, polyvinylidene cyanide, polyvinylidene chloride, polyvinyl fluoride, polyvinylidene fluoride, polytetrafluoroethylene, polyvinyl pyrrolidone, polyvinyl carbazole, polyethylene terephthalate, nylon, polyamide, polyimide, polycarbonate, polybenzimidazole, polyamine, polyimine, polysulfide or polyphosphazene.

Particularly preferred among these compounds are those having polyether, polyester, polycaprolactone, polysiloxane, polyvinyl pyrrolidone, polycarbonate or polyphosphazene.

As Compound C there may be used two or more of these compounds in combination.

If the aforesaid Compound A and Compound B are combined, the isocyanate group in Compound A and the amino group in Compound B are reacted, or if Compound A and Compound C are combined, the isocyanate group in Compound A and the carboxyl group and/or hydroxyl group in Compound C are reacted to cause crosslinking of these compounds, thereby forming a network structure.

The mixing ratio of the aforesaid Compound A and Compound B or Compound A and Compound C depends on which Compound A is combined with Compound B or Compound C and can be properly determined by the crosslinkability of the polymer, the properties required for dye-sensitized solar cell, etc.

Next, the molten salt to be used in the present invention is a solvent-free liquid salt composed of ion alone. The molten salt is not specifically limited so far as it can be normally used in batteries, solar cells, etc. as known in literatures and publications, e.g., "Inorg. Chem.", 1996, 35, 1168-1178, "Electrochemistry", 2002, 2, 130-136, JP-T-9-507334, JP-A-8-259543, and is preferably a salt having a melting point of lower than room temperature (25°C) or a salt which has a melting point of higher than room temperature but stays liquid at room temperature when dissolved with other molten salts or electrolyte salts other than molten salt. Examples of the structure of the molten salt include the following compounds.

As the cation of molten salt, ammonium, imidazolium, oxazolium, thiazolium, piperidinium, pyrazolium, isooxazolium, thiadiazolium, oxadiazolium, triazolium, pyrrolidinium, pyridinium, pyrimidinium, pyridazinium, pyrazinium, triazinium, phosphonium, sulfonium, carbazolinum, indolinium and derivatives are preferred, and ammonium, imidazolium, pyridinium, piperidinum, pyrazolinium and sulfonium are particularly preferred.

As the anion, metal chlorides such as AlCl₄⁻ and Al₂Cl₇⁻, fluorine-containing compounds such as PF₆⁻, BF₄⁻, CF₃SO₃⁻, N(CF₃SO₂)₂⁻, F(HF)ₙ⁻ and CF₃COO⁻, fluorine-free compounds such as NO₃⁻, CH₃COO⁻, C₆H₁₁COO⁻, CH₃OSO₃⁻, CH₃OSO₂⁻, CH₃SO₃⁻, CH₃SO₂⁻ and (CH₃O)₂PO₂⁻ and halides such as iodide and bromide are preferred, and iodide ions are particularly preferred.

The amount of these molten salts to be incorporated is preferably 50% or more based on the weight of the electrolyte.

The molten salt can be synthesized by methods known in various literatures and publications. Taking quaternary ammonium salt as an example, a method can be employed which comprises quaterizing a tertiary amine with an alkyl halide as an alkylating agent at a first stage, and then subjecting the halide anion to ion exchange to desired anion at a second stage. Alternatively, a method can be used which comprises reacting a tertiary amine with an acid having a desired anion to obtain a desired compound at a first stage.

In the present invention, the electrolyte is composed of a network obtained by crosslinking the aforesaid Compound A with Compound B or Compound C and a molten salt incorporated in the network structure. However, since there are a case where the molten salt takes part in the production of an oxidation-reduction pair and a case where the molten salt does not take part in the production of an oxidation-reduction pair, an electrolyte salt other than the aforementioned molten salt is further incorporated in the network structure in the case where the molten salt does not take part in the production of an oxidation-reduction pair. However, also in the case where the molten salt takes part in the production of an oxidation-reduction pair, an electrolyte salt other than the molten salt may be further incorporated in the network structure.

As the electrolyte salt other than the molten salt to be incorporated in the network structure there may be used any electrolyte salt which is used in batteries or solar cells without any special limitation, and preferred examples of the electrolyte salt include combination of metal iodide such as LiI, NaI, KI, CsI and CaI₂ and iodine, combination of metal bromide such as LiBr, NaBr, KBr, CsBr and CaBr₂ and bromine, combination of ferrocyan and ferricyan, combination of fumaric acid and succinic acid, combination of quinone and hydroquinone, combination of ruthenium (II) ion and ruthenium (III) ion, combination of copper (II) ion and copper (III) ion, and combination of manganic acid and permanganic acid, particularly combination of metal iodide and iodine.

The concentration of the electrolyte salt other than the molten salt, if any, is normally from 0.005 to 5 mols/l, particularly preferably from 0.1 to 2.5 mols/l in the molten salt or solvent.

In the present invention, as a diluent there may be used a solvent to make it more easy for the monomer solution composed of Compound A, Compound B or C, molten salt and other salts to penetrate the porous semiconductor such as titanium oxide. Examples of the solvent include butylene carbonate, ethylene carbonate, propylene carbonate, 1,2-dimethoxyethane, dimethyl carbonate, diethyl carbonate, tetrahydrofuran, 1,3-dioxolane, acetonitrile, benzonitrile, γ-butyrolactone, sulfolane, methylsulfolane, dimethyl formamide, dimethyl sulfoxide, 2-methyl tetrahydrofuran, 2,5-dimethyl tetrahydrofuran, 3-methyloxazolidine-2-one, and 3-methoxypropionitrile. One or two or more of these solvents may be used. The amount of these solvents, if used, is preferably 50% or less based on the weight of the electrolyte.

The electrolyte may comprise additives incorporated therein to further improve the performance of the battery. Examples of the additives employable herein include heterocyclic compounds such as 1,2-dimethyl-3-propylimidazolinium iodide, 4-tert-butyl pyridine and 2-n-propylpyridine. The amount of the additives to be incorporated is preferably from 0.001 to 5% based on the weight of the electrolyte.

For solar cells, if the porous semiconductor does not sufficiently have an electrolyte incorporated therein, the conversion efficiency is deteriorated. It is thus desired that the porous semiconductor is impregnated with a mixture of Compound A, Compound B or C, molten salt, other salts and optionally a diluent solvent and then crosslinking is effected. Referring to the method of mixing Compound A, Compound B or C, molten salt, other salts and diluent solvent, the order of mixing these components may be properly selected depending on the difference in reactivity among them.

As the crosslinking method there may be mainly used a thermal crosslinking method, though not specifically limited. The crosslinking conditions differ with the combination of Compound A and Compound B or C or whether or not a catalyst is used and thus may be properly selected for each system, but the crosslinking temperature is preferably from 0°C to 170°C, most preferably from 0°C to 90°C.

The crosslinking may be effected in the presence of a catalyst. Examples of the catalyst employable herein include organic metal catalysts or amine catalysts which are normally used to prepare polyurethane foam. Specific examples of the organic metal catalysts include stannous octoate, stannous oleate, dibutyl tin dilaurate, dibutyl tin diacetate, tetraalkyl titanate, alkyl titanate dimer, polyhydroxy titanium alkylate, titanium acetyl acetonate, titanium tetraacetyl acetonate, titanium octylene glycolate, titanium ethyl acetoacetate, titanium lactate, titanium triethanol aminate, methyl silyl triisocyanate, tetraisocyanate silane, tetraalkyl zirconium, zirconium tetraacetyl acetate, zirconium tributoxy acetyl acetate, zirconium dibutoxybis(acetylacetonate), zirconium tributoxyethyl acetoacetate, zirconium butoxy acetyl acetonatebis(ethylacetoacetate), potassium acetate, sodium carbonate, calcium carbonate, etc. and examples of the amine catalysts include triethylamine, tributyl amine, N-methylmorpholine, N-ethylmorpholine, pyridine, triethylenediamine, 1,4-diazabicyclo[2.2.2]octane, 1,8-diazabicyclo[5.4.0]-7-undecene, N,N,N',N'-tetramethyl-1,3-butanediamine, etc.

The amount of the catalyst to be added is preferably from 0.0001 to 5% based on the weight of the mixture of Compound A, Compound B or C, salts such as molten salt and diluent solvent which is used as necessary.

As the porous semiconductor constituting the porous semiconductor layer there may be exemplified a known semiconductor such as titanium oxide, tin oxide, zinc oxide, tungsten oxide, barium titanate, strontium titanate and cadmium sulfide. Two or more of these porous semiconductors may be used in admixture. Particularly preferred among these semiconductors is titanium oxide from the standpoint of conversion efficiency, stability and safety. Examples of such a titanium oxide include various titanium oxides such as anatase type titanium oxide, rutile type titanium oxide, amorphous titanium oxide, metatitanic acid and orthotitanic acid, and titanium oxide-containing composites, and one or two or more of these titanium oxides may be properly used.

The porous semiconductor may be in various forms such as grain and membrane but is preferably a membrane-like porous semiconductor formed on a substrate.

Preferred examples of the substrate to be used in the case where a membrane-like porous semiconductor is used include glass substrate, plastic substrate, etc., and a substrate having a high transparency (transparent substrate) is particularly preferred.

As a method of forming a membrane-like porous semiconductor on a substrate there may be used various known methods.

Specific examples of such methods include (1) a method which comprises spreading a suspension containing a particulate semiconductor over a substrate, and then subjecting the substrate to drying and calcination, (2) a method which comprises forming a semiconductor layer on a substrate by CVD method or MOCVD method using a desired raw material gas, (3) a method which comprises forming a semiconductor layer by PVD method, vacuum metallizing method, sputtering method or sol-gel method using a solid raw material, (4) a method which comprises forming a semiconductor layer by an electrochemical redox reaction, etc.

Though not specifically limited, the thickness of the porous semiconductor layer is preferably from 0.5 to 20 µm from the standpoint of permeability, conversion efficiency, etc. Further, in order to enhance the conversion efficiency, it is necessary that the membrane-like porous semiconductor have the dye described later adsorbed thereto in a larger amount. To this end, the membrane-like porous semiconductor preferably has a large specific surface area, specifically from about 10 to 200 m²/g.

As the aforementioned particulate semiconductor there may be used a single or compound semiconductor in particulate form having a proper average particle diameter, e.g., from about 1 nm to 500 nm, among commercially available products. Further, examples of the solvent to be used to suspend the particulate semiconductor include glyme-based solvents such as ethylene glycol monomethyl ether, alcohol-based solvents such as isopropyl alcohol, mixed solvents such as mixture of isopropyl alcohol and toluene, water, etc.

The drying and calcination of the aforementioned porous semiconductor are effected under the conditions of temperature, time and atmosphere which are properly adjusted depending on the kind of substrate and particulate semiconductor used. In a general example, the drying and calcination are effected at a temperature of from about 50 to 800°C in the atmosphere or in an atmosphere of inert gas for about 10 seconds to 12 hours. The drying and calcination may be effected at a time at a single temperature or may be effected twice or more times at various temperatures.

Though not specifically limited, the transparent electrically-conductive membrane which can be used as an electrode is preferably a transparent electrically-conductive membrane such as ITO (indium-tin oxide) and SnO₂. These electrodes can be formed by vacuum metallizing method or the like, and the thickness thereof, etc. can be properly predetermined.

As a method of adsorbing a dye which acts as a photosensitizer (hereinafter simply referred to as "dye") to the porous semiconductor layer there may be exemplified, e.g., a method which comprises dipping the porous semiconductor layer formed on the substrate in a solution having a dye dissolved therein.

The dye employable herein is preferably one having absorption in various visible light ranges and infrared ranges which has an interlocking group such as carboxyl group, alkoxy group, hydroxyl group, hydroxyalkyl group, sulfonic acid group, ester group, mercapto group and phosphonyl group in its dye molecule to allow firm adsorption to the semiconductor layer.

The interlocking group supplies electrical bond that facilitates the movement of electron between excited dye and conduction band of semiconductor. Examples of dyes containing such an interlocking group include ruthenium bipyridine-based dyes, azo-based dyes, quinone-based dyes, quinoneimine-based dyes, quinacridone-based dyes, squarilium-based dyes, cyanine-based dyes, melocyanine-based dyes, triphenylmethane-based dyes, xanthene-based dyes, polyphyrin-based dye, phthalocyanine-based dyes, perylene-based dyes, indigo-based dyes, naphthalocyanine-based dyes, etc.

Examples of the solvent to be used in the dissolution of the dye include alcohol-based solvents such as ethanol, ketone-based solvents such as acetone, ether-based solvents such as diethyl ether and tetrahydrofuran, nitrogen-based compounds such as acetonitrile, halogenated aliphatic hydrocarbons such as chloroform, aliphatic hydrocarbons such as hexane, aromatic hydrocarbons such as benzene, esters such as ethyl acetate, etc.

The dye concentration in the solution can be properly adjusted depending on the kind of the dye and solvent used and is preferably somewhat high to enhance the adsorption properties. For example, the dye concentration is preferably 5 x 10⁻⁵ mol/l or more.

The temperature and pressure of the solvent and atmosphere during the dipping of the semiconductor in the solution having a dye dissolved therein are not specifically limited and may be, e.g., room temperature and atmospheric pressure, and the dipping time is preferably properly adjusted depending on the kind of the dye and solvent used, the concentration of the solution, etc. In order to effectively conduct adsorption, dipping may be effected under heating.

Examples of the present invention will be described hereinafter, but the present invention is not limited thereto.

### [Example 1-1]

A dye-sensitized solar cell comprising a gel electrolyte containing a molten salt was prepared by the following method, and the conversion efficiency thereof was then evaluated.

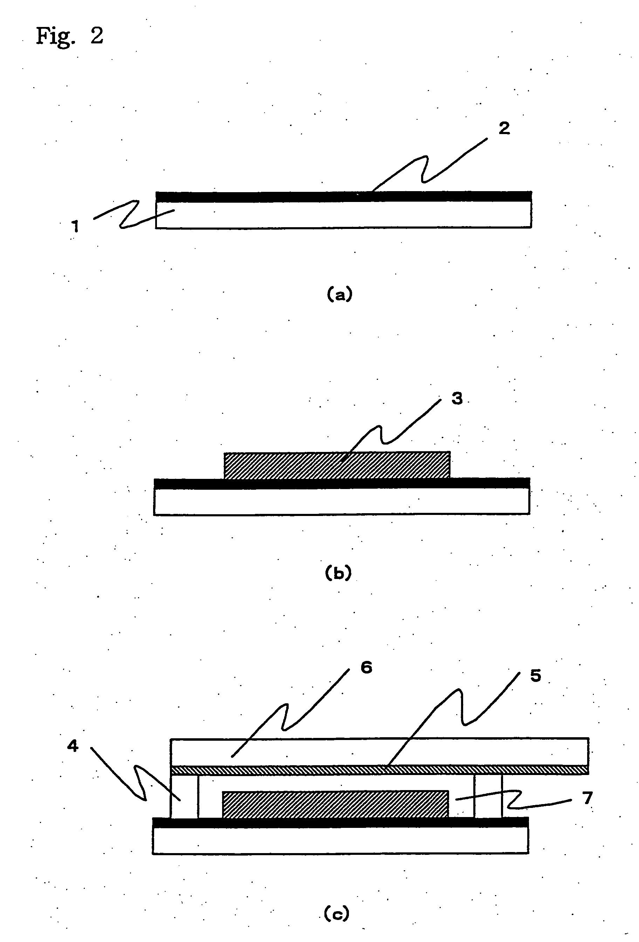

Figs. 2 (a) to 2 (c) each are a sectional view of a dye-sensitized solar cell illustrating the preparation procedure in sequence. In Fig. 2, the reference numeral 1 indicates a transparent substrate, the reference numeral 2 indicates a transparent electrically-conductive membrane, the reference numeral 3 indicates a titanium oxide layer as a porous semiconductor layer, the reference numeral 4 indicates a separator, the reference numeral 5 indicates a platinum layer, the reference numeral 6 indicates an electrically-conductive substrate and the reference numeral 7 indicates a gel electrolyte layer, respectively.

A transparent electrically-conductive membrane 2 made of SnO₂ was formed on a transparent substrate 1 made of glass by vacuum metallizing method, and a titanium oxide layer 3 was then formed on the transparent electrically-conductive layer 2 by the following method.

As a titanium oxide suspension for forming the titanium oxide layer 3 there was used a commercially available titanium oxide suspension (trade name: Ti-Nanoxide D, produced by Solaronix SA). The titanium oxide suspension was spread over the substrate on the transparent electrically-conductive membrane 2 side thereof to a thickness of about 10 µm and an area of about 10 mm x 10 mm by a doctor blade method, subjected to previous drying at 80°C for 30 minutes, and then calcined in the air at 500°C for 40 minutes. As a result, a titanium oxide layer 3 having a thickness of about 7 µm was obtained.

Subsequently, a ruthenium dye (trade name: Ruthenium Complex, produced by Kojima Chemical Reagents Co., Ltd.) was dissolved in anhydrous methanol in a concentration of 4 x 10⁻⁴ mol/l to prepare an adsorbing dye solution. The transparent substrate 1 comprising the titanium oxide layer 3 and the transparent electrically-conductive membrane 2 thus obtained was boiled in the adsorbing dye solution in a container for 1 minute, and then allowed to stand for 10 minutes to cause the dye to be adsorbed to the titanium oxide layer 3. Thereafter, the transparent substrate 1 was washed with anhydrous ethanol several times, and then dried at about 60°C for about 20 minutes.

To a solution obtained by mixing 1-hexyl-3-methylimidazolium iodide synthesized by the following synthesis method as a molten salt and a 2/8 (by volume) mixture of acetonitrile and propylene carbonate as a diluent solvent at a weight ratio of 9 : 1 was added iodine to prepare a 0.1 M iodine solution. 13.2 g of a compound synthesized by the following synthesis method 1-1 as Compound A and 1 g of diethyl toluenediamine as Compound B were then dissolved in 128 g of this solution to prepare a monomer solution.

### (Method for synthesis of molten salt)

53 g of 1-methylimidazolium, 500 ml of toluene and 150 g of n-hexyl iodide were stirred at 100°C in a reaction vessel in a nitrogen atmosphere for 3 hours to obtain 200 g of 1-hexyl-3-methylimidazolium iodide.

### (Synthesis method 1-1)

To 100 parts by weight of a polyteramethylene glycol (trade name: PTMG2000, produced by MITSUBISHI CHEMICAL CORPORATION) were added 18 parts by weight of tolylene diisocyanate and 0.05 parts by weight of dibutyl tin dilaurate as a catalyst in the reaction vessel, and the mixture was then reacted at 80°C to obtain a compound having a molecular weight of 2,350.

The monomer solution thus obtained was then allowed to penetrate the titanium oxide layer 3 in the following procedure.
(1) A vacuum container in which a vessel such as laboratory dish having the titanium oxide layer 3 on the transparent substrate 1 comprising the transparent electrically-conductive membrane 2 received therein had been put is vacuumed by a rotary pump for about 10 minutes. (2) The monomer solution is injected into the vacuum container while keeping the interior of the vacuum container in vacuo for 10 minutes so that the titanium oxide layer 3 is dipped in the monomer solution, thereby impregnating the titanium oxide layer 3 thoroughly with the monomer solution. (3) As shown in Fig. 2 (c), the separator 4 made of polyimide and the electrically- conductive substrate 6 comprising a platinum layer 5 are disposed and fixed by a fixture. Thereafter, the materials are heated to about 90°C for 60 minutes to cause heat polymerization by which a gel electrolyte layer 7 is prepared.

The dye-sensitized solar cell comprising the gel electrolyte layer 7 prepared by the aforementioned method has the same conversion efficiency as solar cell comprising an electrolyte made of a liquid. In some detail, a dye-sensitized solar cell having a performance comprising a shortcircuit current of 12.9 [mA/cm²], an open voltage of 0.75 [V], a fill factor of 0.64 and a conversion efficiency of 6.2 [%] (measurement conditions: AM-1.5) was obtained.

In the following Examples 1-2 to 1-16, dye- sensitized solar cells were prepared from the same constituents and in the same manner as in Example 1-1 except that Compound A, Compound B, molten salt, other salts, solvent, etc. were changed to prepare the gel electrolyte layer 7, and their conversion efficiency was measured. The results are set forth in Table 1. Referring to the compounds synthesized by the present inventors, their synthesis methods will be described.

### [Example 1-2]

To a solution obtained by mixing 1-butylpyridinium tetrafluoroborate as a molten salt and a 2/2/6 (by volume) mixture of acetonitrile, ethylene carbonate and propylene carbonate as a diluent solvent at a weight ratio of 6 : 4 were added iodine and lithium iodide to prepare a solution having an iodine concentration of 0.05 M and a lithium iodide concentration of 0.1 M. 1.3 g of a trimethylolpropane-modified tolylene diisocyanate (trade name: Colonate L, produced by NIPPON POLYURETHANE INDUSTRY CO., LTD.) as Compound A and 10 g of a polyetheramine (trade name: JEFFAMINE T-5000, produced by HUNTSMAN LLC; molecular weight: 5, 000) were then dissolved in 45.2 g of this solution to prepare a monomer solution.

### [Example 1-3]

To a 1/1 (by weight) mixture of 1-hexyl-3-methylimidazolium iodide and 1-ethyl-3-methyl imidazolium tetrafluoroborate was added iodine to prepare a 0.05 M iodine solution. 10.5 g of a compound synthesized by the following synthesis method 1-2 as Compound A and 5 g of a polyetheramine (trade name: JEFFAMINE T-5000, produced by HUNTSMAN LLC) as Compound B were then dissolved in 295 g of this solution to prepare a monomer solution.

### (Synthesis method 1-2)

In the reaction vessel were charged 92 g of glycerin as a starting material, 30 g of potassium hydroxide as a catalyst and then 5,950 g of ethylene oxide and 3,970 g of propylene oxide. The mixture was reacted at 130°C for 10 hours, and then subjected to neutralization- dehydration to obtain an ethylene oxide-propylene oxide copolymer having a molecular weight of 10,000. To 100 g of the compound thus obtained were added 5.3 g of tolylene diisocyanate and 0.05 g of dibutyl tin dilaurate as a catalyst, and the mixture was then reacted at 80°C for 3 hours to obtain a compound having a molecular weight of 10,520.

### [Example 1-4]

To a 1/1 (by weight) mixture of 1-hexyl-3-methylimidazolium iodide and 1-ethyl-3-methyl imidazolium tetrafluoroborate was added iodine to prepare a 0.05 M iodine solution. A solution obtained by dissolving 10.5 g of a compound synthesized by the foregoing synthesis method 1-2 as Compound A in 100 g of this solution and a solution obtained by dissolving 5 g of a polyetheramine (trade name: JEFFAMINE T-5000, produced by HUNTSMAN LLC) as Compound B in 195 g of the same 0.05 M iodine solution as above were then mixed to prepare a uniform monomer solution.

### [Example 1-5]

To a solution obtained by mixing a 1/1 (by weight) mixture of 1,2-dimethyl-4-fluoropyrazolium tetrafluoroborate and 1-butyl-3-methylimidazolium tetrafluoroborate as a molten salt and a 2/8 (by volume) mixture of acetonitrile and propylene carbonate as a diluent solvent at a weight ratio of 6 : 4 were added iodine and lithium iodide to prepare a solution having an iodine concentration of 0.05 M and a lithium iodide concentration of 0.1 M. 8.7 g of tolylene diisocyanate (molecular weight: 174) as Compound A and 100 g of a polyetheramine (trade name: JEFFAMINE T-3000, produced by HUNTSMAN LLC) as Compound B were then dissolved in 326 g of this solution to prepare a monomer solution.

### [Example 1-6]

To a solution obtained by mixing 3-butyl-4-methylthiazolium tetrafluoroborate as a molten salt and a 2/8 (by volume) mixture of acetonitrile and propylene carbonate as a diluent solvent at a weight ratio of 8 : 2 were added iodine and lithium iodide to prepare a solution having an iodine concentration of 0.05 M and a lithium iodide concentration of 0.1 M. 45.8 g of a compound synthesized by the following synthesis method 1-3 as CompoundA and 1 g of dimetylthiotoluene diamine (produced by Albemarle Corporation; molecular weight: 214.4) were then dissolved in 187 g of this solution to prepare a monomer solution.

### (Synthesis method 1-3)

In the reaction vessel were charged 166 g of diglycerin as a starting material, 30 g of potassium hydroxide as a catalyst and then 11,270 g of ethylene oxide and 7,490 g of butylene oxide. The mixture was reacted at 130°C for 10 hours, and then subjected to neutralization-dehydration to obtain a tetrafunctional ethylene oxide-butylene oxide copolymer having a molecular weight of 18, 920. To 100 g of the compound thus obtained were added 3.7 g of tolylene diisocyanate and 0.05 g of dibutyl tin dilaurate as a catalyst, and the mixture was then reacted at 80°C to obtain a compound having a molecular weight of 19,620.

### [Example 1-7]

To a solution obtained by mixing trimethyl propyl ammonium bistrifluoromethanesulfonylimide as a molten salt and a 2/5/3 (by volume) mixture of acetonitrile, propylene carbonate and 3-methyloxazolidine-2-one as a diluent solvent at a weight ratio of 8 : 2 were added iodine and lithium iodide to prepare a solution having an iodine concentration of 0.05 M and a lithium iodide concentration of 0.1 M. 6.7 g of isophorone diisocyanate (molecular weight: 222) as Compound A and 100 g of a polyetheramine (trade name: JEFFAMINE T-5000, produced by HUNTSMAN LLC) as Compound B were then dissolved in 320 g of this solution to prepare a monomer solution.

### [Example 1-8]

To a solution obtained by mixing 1-ethylcarbazolium tetrafluoroborate as a molten salt and a 2/8 (by volume) mixture of acetonitrile and propylene carbonate as a diluent solvent at a weight ratio of 9 : 1 were added iodine and lithium iodide to prepare a solution having an iodine concentration of 0.05 M and a lithium iodide concentration of 0.1 M. 41.5 g of a compound synthesized by the following synthesis method 1-4 as Compound A and 10 g of a polyetheramine (trade name: JEFFAMINE D-2000, produced by HUNTSMAN LLC; molecular weight: 2, 000) as Compound B were then dissolved in 206 g of this solution, and 0.03 g of triethylene diamine was added to the solution as a catalyst to prepare a monomer solution.

### (Synthesis method 1-4)

In the reaction vessel were charged 62 g of ethylene glycol as a starting material, 30 g of potassium hydroxide as a catalyst and then 6,340 g of ethylene oxide and 1,570 g of propylene oxide. The mixture was reacted at 130°C for 10 hours, and then subjected to neutralization-dehydration to obtain a bifunctional ethylene oxide-propylene oxide copolymer having a molecular weight of 7,960. To 100 g of the compound thus obtained were added 4.2 g of hexamethylene diisocyanate, 0.1 g of dibutyl tin dilaurate as a catalyst and 100 g of methyl ethyl ketone as a diluent solvent. The mixture was then reacted at 80°C. After reaction, methyl ethyl ketone was removed to obtain a compound having a molecular weight of 8,300.

### [Example 1-9]

To a solution obtained by mixing 1-methylpyrrolidinium tetrafluoroborate as a molten salt and a 2/8 (by volume) mixture of acetonitrile and propylene carbonate as a diluent solvent at a weight ratio of 9 : 1 were added iodine and lithium iodide to prepare a solution having an iodine concentration of 0.03 M and a lithium iodide concentration of 0.1 M. 2.5 g of a compound synthesized by the following synthesis method 1-5 and 9.5 g of a compound synthesized by the foregoing synthesis method 1-2 as Compound A and 1 g of a polyetheramine (trade name: JEFFAMINE D-230, produced by HUNTSMAN LLC) as Compound B were then dissolved in 24 g of this solution to prepare a monomer solution.

### (Synthesis method 1-5)

In the reaction vessel, 53.4 g of a polyester polyol (trade name: Fantol PL-2010, produced by Toho Rika Co., Ltd.) and 34.8 g of tolylene diisocyanate were mixed. To the mixture was then added 0.05 g of dibutyl tin dilaurate as a catalyst. The mixture was then reacted at 80°C to obtain a compound.

### [Example 1-10]

To a solution obtained by mixing 1-ethyl-2-phenylindolium tetrafluoroborate as a molten salt and a 2/8 (by volume) mixture of acetonitrile and propylene carbonate as a diluent solvent at a weight ratio of 85 : 15 were added iodine and lithium iodide to prepare a solution having an iodine concentration of 0.05 M and a lithium iodide concentration of 0.1 M. 1.7 g of a compound synthesized by the following synthesis method 1-6 and 3.2 g of a compound synthesized by the foregoing synthesis method 1-2 as Compound A and 1 g of a polyetheramine (trade name: JEFFAMINE D-400, produced by HUNTSMAN LLC) as Compound B were then dissolved in 13.6 g of this solution, and 0.01 g of N-ethyl morpholine was added to the solution as a catalyst to prepare a monomer solution.

### (Synthesis method 1-6)

In the reaction vessel, 50 g of a polycaprolactone diol (trade name: Praxel L205AL, produced by DAICEL CHEMICAL INDUSTRIES, LTD.) and 34.8 g of tolylene diisocyanate were mixed. To the mixture was then added 0.05 g of dibutyl tin dilaurate as a catalyst. The mixture was then reacted at 80°C to obtain a compound.

### [Example 1-11]

To a 8/2 (by weight) mixture of 1-butyl-3-methylimidazolium iodide and 2-ethyl-3-pentyl-4-isopropyloxazolium hexafluorophosphate as a molten salt was added iodine to prepare a 0.1 M iodine solution. 14 g of a compound (molecular weight: 848) synthesized by the following synthesis method 7 and 1.1 g of a compound synthesized by the foregoing synthesis method 1-2 as Compound A and 0.5 g of ethylene diamine (EDA98, produced by Seitetsu Kagaku Kogyo K.K.; molecular weight: 60.1) and 16.7 g of a polyetheramine (trade name: JEFFAMINE T-3000, produced by HUNTSMAN LLC) as Compound B were then dissolved in 129 g of this solution to prepare a monomer solution.

### (Synthesis method 1-7)

In the reaction vessel, 50 g of a polycarbonate diol (trade name: Praxel CD205PL, produced by DAICEL CHEMICAL INDUSTRIES, LTD.) and 34.8 g of tolylene diisocyanate were mixed. To the mixture was then added 0.05 g of dibutyl tin dilaurate as a catalyst. The mixture was then reacted at 70°C to obtain a compound.

### [Example 1-12]

To a solution obtained by mixing a 1/1 (by weight) mixture of triethylsulfonium bistrifluoromethane sulfonylimide and 1-octyl-3-methylimidazolium iodide as a molten salt and a 3/5/2 (by volume) mixture of tetrahydrofuran, diethyl carbonate and γ-butyrolactone as a diluent solvent at a weight ratio of 4 :1 was added iodine to prepare a 0.1 M iodine solution. 15.8 g of a polybutadiene-TDI adduct (produced by Idemitsu Atochem Co., Ltd.) as Compound A and 10 g of a polyetheramine (trade name: JEFFAMINE T-3000, produced by HUNTSMAN LLC) as Compound B were then dissolved in 10.3 g of this solution to prepare a monomer solution.

### [Example 1-13]

To a solution obtained by mixing 1-hexyl-3-methylimidazolium iodide as a molten salt and a 3/7 (by volume) mixture of diethyl carbonate and ethylene carbonate as a diluent solvent at a weight ratio of 4 :1 was added iodine to prepare a 0.1 M iodine solution. 5 g of a compound synthesized by the following synthesis method 1-8 as Compound A and 10 g of a polyetheramine (trade name: JEFFAMINE D-2000, produced by HUNTSMAN LLC) as Compound B were then dissolved in 60 g of this solution to prepare a monomer solution.

### (Synthesis method 1-8)

In the reaction vessel, 50 g of a polyolefin-based polyol (trade name: Carbodiol D-1000, produced by TOAGOSEI CO., LTD.) and 18 g of tolylene diisocyanate were then dissolved in methyl ethyl ketone. To the mixture was then added 0.04 g of dibutyl tin dilaurate as a catalyst. The mixture was then reacted at 60°C to obtain a compound.

### [Example 1-14]

To a solution obtained by mixing a 1/1 (by weight) mixture of tetrapropyl ammonium iodide and trimethylhexyl ammonium bistrifluoromethane sulfonylimide as a molten salt and a 2/8 (by volume) mixture of acetonitrile and propylene carbonate as a diluent solvent at a weight ratio of 9 :1 was added iodine to prepare a 0.05 M iodine solution. 9.1 g of a compound synthesized by the foregoing synthesis method 1-2 as Compound A and 0.2 g of a polyetheramine (trade name: JEFFAMINE D-400, produced by HUNTSMAN LLC) and 0.8 g of a silicone amine (trade name: Silaplane FM-3311, produced by Chisso Corporation) as Compound B were then dissolved in 58 g of this solution to prepare a monomer solution.

### [Example 1-15]

To 1-methyl-3-butylimidazolium iodide as a molten salt was added iodine to prepare a 0.1 M iodine solution. 2.5 g of a compound synthesized by the following synthesis method 1-9 as Compound A and 1 g of a polyetheramine (trade name: JEFFAMINE D-2000, produced by HUNTSMAN LLC) as Compound B were then dissolved in 31 g of this solution. To the solution was then added 0.03 g of N, N-diethylcyclohexylamine as a catalyst to prepare a monomer solution.

### (Synthesis method 1-9)

A polydichlorophosphazene obtained by the ring opening polymerization of 3,480 g of hexachlorocyclotriphosphazene, sodium salt of 120 g of a polyethylene glycol having a molecular weight of 200 and sodium salt of 1,080 g of a methoxypolyethylene glycol were subjected to condensation reaction to obtain a polyphosphazene polyol having a molecular weight of 13, 350. To 100 g of the compound thus obtained were then added 0.8 g of tolylene diisocyanate, 0.1 g of dibutyl tin dilaurate as a catalyst and 100 g of methyl ethyl ketone as a diluent solvent. The mixture was then reacted at 80°C. After reaction, methyl ethyl ketone was removed to obtain a compound having a molecular weight of 13,450.

### [Example 1-16]

To a 1/1 (by weight) mixture of 1-hexyl-3-methylimidazolium iodide and 1-butyl-3- methylimidazolium tetrafluoroborate as a molten salt was added iodine to prepare a 0.1 M iodine solution. 96.1 g of a compound synthesized by the following synthesis method 1-10 as Compound A and 1 g of diethyltoluene diamine as Compound B were then dissolved in 388.4 g of this solution. To the solution was then added 0.1 g of triethylene diamine as a catalyst to prepare a monomer solution.

### (Synthesis method 1-10)

In the reaction vessel were charged 182 g of sorbitol as a starting material, 30 g of potassium hydroxide as a catalyst and then 38,720 g of Ethylene oxide and 9,860 g of propylene oxide. The mixture was reacted at 130°C for 10 hours, and then subjected to neutralization-dehydration to obtain a hexafunctional ethylene oxide-propylene oxide copolymer having a molecular weight of 48,560. To 100 g of the compound thus obtained were added 2.1 g of tolylene diisocyanate, 0.1 g of dibutyl tin dilaurate as a catalyst and 100 g of methyl ethyl ketone as a diluent solvent, and the mixture was then reacted at 80°C. After reaction, methyl ethyl ketone was removed to obtain a compound having a molecular weight of 49,620.

### [Example 1-17]

To a solution obtained by mixing 1-ethyl-3-methylimidazolium tetrafluoroborate as a molten salt and a 3/7 (by volume) mixture of diethyl carbonate and propylene carbonate as a diluent solvent at a weight ratio of 6 :4 were added iodine and lithium iodide to prepare a solution having an iodine concentration of 0.05 M and a lithium iodide concentration of 0.1 M. 14.2 g of a compound synthesized by the following synthesis method 1-11 and 10 g of a polyetheramine (trade name: JEFFAMINE T-3000, produced by HUNTSMAN LLC) as Compound B were then dissolved in 56.5 g of this solution to prepare a monomer solution.

### (Synthesis method 1-11)

In the reaction vessel, 250 g of a polyisoprene polyol (trade name: Poly ip, produced by Idemitsu Atochem Co., Ltd.) and 35 g of tolylene diisocyanate were then dissolved in 500 g of methyl ethyl ketone. To the mixture was then added 0.05 g of dibutyl tin dilaurate as a catalyst. The mixture was then reacted at 60°C. After reaction, methyl ethyl ketone was removed to obtain a compound.

### [Example 1-18]

To a solution obtained by mixing N-methyl-N-propylpiperidinium bistrifluoromethane sulfonylimide as a molten salt and a 3/7 (by volume) mixture of propylene carbonate and 3-methoxypropionitrile as a diluent solvent at a weight ratio of 85 :15 were added iodine, lithium iodide and 4-tert-butylpyridine to prepare a solution having an iodine concentration of 0.05 M, a lithium iodide concentration of 0.1 M and a 4-tert-butylpyridine concentration of 0.2 M. A monomer solution was then prepared in the same manner as in Example 1-4 except that this solution was used instead of 0.05 M iodine solution of Example 1-4.

### [Example 1-19]

To a solution obtained by mixing 1-methylpyrazonium tetrafluoroborate as a molten salt and a 2/8 (by volume) mixture of propylene carbonate and 3-methoxypropionitrile as a diluent solvent at a weight ratio of 85 :15 were added iodine, lithium iodide and 2-n-propylpyridine to prepare a solution having an iodine concentration of 0.04 M, a lithium iodide concentration of 0.1 M and a 2-n-propylpyridine concentration of 0.3 M. A monomer solution was then prepared in the same manner as in Example 1-4 except that this solution was used instead of 0.05 M iodine solution of Example 1-4.

### [Example 1-20]

6 g of 1,2-dimethyl-3-propylimidazolium iodide was dissolved in 300 g of hexylmethylimidazolium iodide as a molten salt. To the solution was then added iodine and 4-tert-butylpyridine to prepare a solution having an iodine concentration of 0.5 M and a 4-tert-butylpyridine concentration of 0.5 M. A monomer solution was then prepared in the same manner as in Example 1-4 except that this solution was used instead of 0.05 M iodine solution of Example 1-4.

### [Example 1-21]

To butylmethylimidazolium iodide as a molten salt were added iodine and 4-tert-butylpyridine to prepare a solution having an iodine concentration of 0.4 M and a 4-tert-butylpyridine concentration of 0.2 M. A monomer solution was then prepared in the same manner as in Example 1-4 except that this solution was used instead of 0.05 M iodine solution of Example 1-4.

**Table 1**

| | Conversion efficiency (%) |
|---|---|
| Example 1-1 | 6.2 |
| Example 1-2 | 7.2 |
| Example 1-3 | 5.8 |
| Example 1-4 | 5.9 |
| Example 1-5 | 7.0 |
| Example 1-6 | 6.9 |
| Example 1-7 | 6.3 |
| Example 1-8 | 6.0 |
| Example 1-9 | 5.4 |
| Example 1-10 | 6.5 |
| Example 1-11 | 4.2 |
| Example 1-12 | 4.6 |
| Example 1-13 | 4.7 |
| Example 1-14 | 6.0 |
| Example 1-15 | 5.5 |
| Example 1-16 | 5.1 |
| Example 1-17 | 4.9 |
| Example 1-18 | 6.6 |
| Example 1-19 | 6.9 |
| Example 1-20 | 4.5 |
| Example 1-21 | 4.9 |

### [Example 2-1]

A dye-sensitized solar cell was prepared in the same manner as in Example 1-1 except that as the monomer solution there was used the following one.

To a solution obtained by mixing 1-hexyl-3-methylimidazolium iodide as a molten salt and a 2/8 (by volume) mixture of acetonitrile and propylene carbonate as a diluent solvent at a weight ratio of 9 : 1 was added iodine to prepare a 0.1 M iodine solution. 11.3 g of a compound synthesized by the following synthesis method 2-1 as Compound A and 1 g of a polyester polyol (trade name: Fantol, produced by Toho Rika Co., Ltd.) as Compound C were then dissolved in 111 g of this solution, and 0.02 g of a 30 wt-% propylene glycol solution of 1,4-diazabicyclo[2.2.2]octane was added to the solution as a catalyst to prepare a monomer solution.

### (Synthesis method 2-1)

In the reaction vessel were charged 92 g of glycerin as a starting material, 30 g of potassium hydroxide as a catalyst and then 5,950 g of ethylene oxide and 3,970 g of propylene oxide. The mixture was reacted at 130°C for 10 hours, and then subjected to neutralization- dehydration to obtain a trifunctional ethylene oxide- propylene oxide copolymer having a molecular weight of 10, 000. To 100 g of the compound thus obtained were added 5.3 g of tolylene diisocyanate and 0.05 g of dibutyl tin dilaurate as a catalyst, and the mixture was then reacted at 80°C for 3 hours to obtain a compound having a molecular weight of 10,520.

The monomer solution thus obtained was then allowed to penetrate the titanium oxide layer 3 in the same manner as in Example 1-1 to prepare a gel electrolyte layer 7.

The dye-sensitized solar cell comprising the gel electrolyte layer 7 prepared by the aforementioned method had a performance comprising a shortcircuit current of 12.5 [mA/cm²], an open voltage of 0.73 [V], a fill factor of 0.65 and a conversion efficiency of 5.9 [%] (measurement conditions: AM-1.5).

In the following Examples 2-2 to 2-15, dye- sensitized solar cells were prepared from the same constituents and in the same manner as in Example 2-1 except that Compound A, Compound C, molten salt, other salts, solvent, etc. were changed to prepare the gel electrolyte layer 7, and their conversion efficiency was measured. The results are set forth in Table 2.

### [Example 2-2]

To a solution obtained by mixing 1-butylpyridinium tetrafluoroborate as a molten salt and a 2/2/6 (by volume) mixture of acetonitrile, ethylene carbonate and propylene carbonate as a diluent solvent at a weight ratio of 6 : 4 were added iodine and lithium iodide to prepare a solution having an iodine concentration of 0.05 M and a lithium iodide concentration of 0.1 M. 0.35 g of tolylene diisocyanate (molecular weight: 174) as Compound A and 5 g of a compound synthesized by the following synthesis method 2-2 and 5 g of a compound synthesized by the following synthesis method 2-3 as Compound C were then dissolved in 42 g of this solution, and 0.01 g of a 30 wt-% propylene glycol solution of 1,4-diazabicyclo[2.2.2]octane was added to the solution as a catalyst to prepare a monomer solution.

### (Synthesis method 2-2)

In the reaction vessel, 92 g of glycerin as a starting material was subjected to addition reaction with 1,910 g of propylene oxide to obtain a trifunctional propylene oxide having a molecular weight of 2,000.

### (Synthesis method 2-3)

In the reaction vessel, 62 g of ethylene glycol as a starting material was subj ected to addition reaction with 6, 960 g of ethylene oxide and 2,990 g of propylene oxide to obtain a bifunctional ethylene oxide-propylene oxide copolymer having a molecular weight of 10,000.

### [Example 2-3]

To a 1/1 (by weight) mixture of 1-hexyl-3-methylimidazolium iodide and 1-ethyl-3-methylimidazolium tetrafluoroborate as a molten salt was added iodine to prepare a 0.1 M iodine solution. 8 g of tolylene diisocyanate as Compound A and 9 g of a compound synthesized by the following synthesis method 2-4 and 1 g of a compound synthesized by the following synthesis method 2-5 as Compound C were then dissolved in 342 g of this solution, and 0.07 g of 1,8- diazabicyclo[5.4.0]-7-undecene was added to the solution as a catalyst to prepare a monomer solution.

### (Synthesis method 2-4)

In the reaction vessel, 62 parts by weight of ethylene glycol as a starting material was subjected to addition reaction with 138 parts by weight of ethylene oxide to obtain a polyethylene glycol having a molecular weight of 200.

### (Synthesis method 2-5)

In the reaction vessel, 60 g of vinyl pyrrolidone and 138 g of water were mixed. The mixture was polymerized with 0.003 g of a 1 wt-% copper sulfate, 0.3 g of a 28 wt-% aqueous ammonia and 1.4 g of a 30 wt-% aqueous hydrogen peroxide at 25°C, and then dehydrated to obtain a polyvinyl pyrrolidone having a K value of 30.

### [Example 2-4]

To a solution obtained by mixing a 1/1 mixture of 1,2-dimethyl-4-fluoropyrazolium tetrafluoroborate and 1-butyl-3-methylimidazolium tetrafluoroborate as a molten salt and a 2/8 (by volume) mixture of acetonitrile and propylene carbonate as a diluent solvent at a weight ratio of 6 : 4 were added iodine and lithium iodide to prepare a solution having an iodine concentration of 0.05 M and a lithium iodide concentration of 0.1 M. 0.03 g of isophorone diisocyanate (molecular weight: 222) as Compound A and 10 g of a compound synthesized by the following synthesis method 2-6 as Compound C were then dissolved in 30 g of this solution, and 0.01 g of N-methyl morpholine was added to the solution as a catalyst to prepare a monomer solution.

### (Synthesis method 2-6)

A polydichlorophosphazene obtained by the ring opening polymerization of 250 parts by weight of hexachlorocyclotriphosphazene and sodium salt of 860 parts by weight of a polyethylene glycol having a molecular weight of 230 were subjected to polycondensation to obtain a polyphosphazene polyol having a molecular weight of 95,000.

### [Example 2-5]

To a solution obtained by mixing 3-butyl-4-methylthiazolium tetrafluoroborate and a 1/5/4 (by volume) mixture of acetonitrile, dimethyl sulfoxide and propylene carbonate as a diluent solvent at a weight ratio of 55 : 45 were added iodine and lithium iodide to prepare a solution having an iodine concentration of 0.05 M and a lithium iodide concentration of 0.1 M. 2 g of tolylene diisocyanate as Compound A and 10 g of a silicone (trade name: modified silicone oil FM-4411, produced by Chisso Corporation; molecular weight: 1, 000) as Compound C were then dissolved in 48 g of this solution, and 0.01 g of dibutyl tin dilaurate was added to the solution as a catalyst to prepare a monomer solution.

### [Example 2-6]

To a solution obtained by mixing trimethylpropyl ammonium trifluoromethane sulfonylimide as a molten salt and a 9/1 (by volume) mixture of acetonitrile and 3-metyl oxazolidine-2-one as a diluent solvent at a weight ratio of 8 : 2 were added iodine and lithium iodide to prepare a solution having an iodine concentration of 0.05 M and a lithium iodide concentration of 0.1 M. 6 g of a compound synthesized by the following synthesis method 2-7 as Compound A and 5 g of a polyether-modified polycarbonate diol (trade name: Praxel CD-221, produced by DAICEL CHEMICAL INDUSTRIES, LTD.; molecular weight: 2,000) as Compound C were then dissolved in 33 g of this solution, and 0.01 g of tetramethyl butane diamine was added to the solution as a catalyst to prepare a monomer solution.

### (Synthesis method 2-7)

To 100 parts by weight of a polyteramethylene glycol (trade name: PTMG2000, produced by MITSUBISHI CHEMICAL CORPORATION) were added 18 parts by weight of tolylene diisocyanate and 0.05 parts by weight of dibutyl tin dilaurate as a catalyst in the reaction vessel, and the mixture was then reacted at 80°C to obtain a compound having a molecular weight of 2,350.

### [Example 2-7]

To a solution obtained by mixing 1-ethyl carbazolium tetrafluoroborate as a molten salt and a 1/5/4 (by volume) mixture of acetonitrile, dimethyl sulfoxide and propylene carbonate as a diluent solvent at a weight ratio of 6 : 4 were added iodine and lithium iodide to prepare a solution having an iodine concentration of 0.05 M and a lithium iodide concentration of 0.1 M. 0.6 g of isophorone diisocyanate as Compound A and 10 g of a polycaprolactone (trade name: Praxel L230AL, produced by DAICEL CHEMICAL INDUSTRIES, LTD.; molecular weight: 3, 000) as Compound C were then dissolved in 606 g of this solution, and 0.01 g of dibutyl tin dilaurate was added to the solution as a catalyst to prepare a monomer solution.

### [Example 2-8]

To a solution obtained by mixing 1-methyl pyrrolidinum tetrafluoroborate as a molten salt and a 2/8 (by volume) mixture of acetonitrile and propylene carbonate as a diluent solvent were added iodine and lithium iodide to prepare a solution having an iodine concentration of 0.03 M and a lithium iodide concentration of 0.1 M. 36.8 g of a compound synthesized by the following synthesis method 2-8 as Compound A and 0.5 g of a compound synthesized by the foregoing synthesis method 2-2 as Compound C were then dissolved in 709 g of this solution, and 0.15 g of 1,8- diazabicyclo[5.4.0]-7-undecene was added to the solution as a catalyst to prepare a monomer solution.

### (Synthesis method 2-8)

In the reaction vessel, 62 parts by weight of ethylene glycol as a starting material was subjected to addition reaction with 78,000 parts by weight of ethylene oxide and 19,600 parts by weight of propylene oxide to obtain a bifunctional ethylene oxide-propylene oxide copolymer having a molecular weight of 97,700. To 100 parts by weight of the compound thus obtained were added 0.4 parts by weight of hexamethylene diisocyanate, 0.1 parts by weight of dibutyl tin dilaurate as a catalyst and 100 parts by weight of methyl ethyl ketone as a diluent solvent. The mixture was then reacted at 80°C. After reaction, methyl ethyl ketone was removed to obtain a compound having a molecular weight of 98,000.

### [Example 2-9]

To a solution obtained by mixing 1-ethyl-2-phenylindolium tetrafluoroborate as a molten salt and a 2/8 (by volume) mixture of acetonitrile and propylene carbonate as a diluent solvent at a weight ratio of 85 : 15 were added iodine and lithium iodide to prepare a solution having an iodine concentration of 0.05 M and a lithium iodide concentration of 0.1 M. 13.6 g of a compound obtained by the following synthesis method 2-9 as Compound A and 0.3 g of a compound synthesized by the foregoing synthesis method 2-4 and 0.7 g of a compound obtained by the following synthesis method 2-10 as Compound C were then dissolved in 34 g of this solution, and 0.01 g of a 30 wt-% propylene glycol solution of 1,4- diazabicyclo [2.2.2]octane was added to the solution as a catalyst to prepare a monomer solution.

### (Synthesis method 2-9)

In the reaction vessel were charged 62 g of ethylene glycol as a starting material, 30 g of potassium hydroxide as a catalyst and then 6,340 g of ethylene oxide and 1,570 g of propylene oxide. The mixture was reacted at 130°C for 10 hours, and then subjected to neutralization- dehydration to obtain a bifunctional ethylene oxide-propylene oxide copolymer having a molecular weight of 7,960. To 100 g of the compound thus obtained were added 4.2 g of hexamethylene diisocyanate, 0.1 g of dibutyl tin dilaurate as a catalyst and 100 g of methyl ethyl ketone as a diluent solvent, and the mixture was then reacted at 80°C. After reaction, methyl ethyl ketone was removed to obtain a compound having a molecular weight of 8,300.

### (Synthesis method 2-10)

In the reaction vessel were charged 92 g of glycerin as a starting material, 24 g of potassium hydroxide as a catalyst and then 6,340 g of ethylene oxide and 1,590 g of propylene oxide. The mixture was reacted at 130°C for 8 hours, and then subjected to neutralization- dehydration to obtain a trifunctional ethylene oxide-propylene oxide copolymer having a molecular weight of 8,000. 100 g of the compound thus obtained and 4.1 g of chloroacetic acid methylester were reacted at 60°C in the presence of an alkaline catalyst to undergo alcholation, and then subjected to treatment with sulfuric acid to obtain 90 g of a carboxyl group-modified polyether having a molecular weight of 8,140.

### [Example 2-10]

To a 8/2 (by weight) mixture of 1-butyl-3-methylimidazolium iodide and 2-ethyl-3-pentyl-4-isopropyloxazolium hexaflurophosphate as a molten salt was added iodine to prepare a 0.1 M iodine solution. 1.6 g of a compound (molecular weight: 882) synthesized by the following synthesis method 2-11 as Compound A and 10 g of a compound synthesized by the following synthesis method 2-12 as Compound C were then dissolved in 46 g of this solution, and 0.01 g of 1,8- diazabicyclo[5.4.0]-7-undecene was added to the solution as a catalyst to prepare a monomer solution.

### (Synthesis method 2-11)

In the reaction vessel, 53.4 g of a polyester polyol (trade name: Fantol PL-2010, produced by Toho Rika Co., Ltd.) and 34.8 g of tolylene diisocyanate were mixed, and 0.05 g of dibutyl tin dilaurate was then added to the mixture as a catalyst. The mixture was then reacted at 80°C to obtain a compound.

### (Synthesis method 2-12)

In the reaction vessel were charged 106 g of diethylene glycol as a starting material, 24 g of potassium hydroxide as a catalyst and then 2,940 g of ethylene oxide and 1,980 g of propylene oxide. The mixture was reacted at 130°C for 8 hours, and then subjected to neutralization-dehydration to obtain a bifunctional ethylene oxide-propylene oxide copolymer having a molecular weight of 4,980. 100 g of the compound thus obtained and 4.5 g of chloroacetic acid methylester were reacted at 60°C in the presence of an alkaline catalyst to undergo alcholation, and then subjected to treatment with sulfuric acid to obtain 90 g of a carboxyl group-modified polyether having a molecular weight of 5,000.

### [Example 2-11]

To a 1/1 (by weight) mixture of triethylsulfonyl bistrifluoromethane sulfonylimide and 1-hexyl-3-methylimidazolium iodide as a molten salt was added iodine to prepare a 0.1 M iodine solution. 2 g of a compound synthesized by the foregoing synthesis method 2-11 as Compound A and 10 of a carboxyl group-modified polysiloxane (trade name: X-22-162C, produced by Shin-Etsu Chemical Co., Ltd.; molecular weight: 4,600) as Compound C were then dissolved in 48 g of this solution, and 0.01 g of 1,8-diazabicyclo[5.4.0]-7-undecene was added to the solution as a catalyst to prepare a monomer solution.

### [Example 2-12]

To a solution obtained by mixing 1-hexyl-3-methylimidazolium iodide as a molten salt and a 2/8 (by volume) mixture of acetonitrile and propylene carbonate as a diluent solvent at a weight ratio of 7 :3 was added iodine to prepare a 0.05 M iodine solution. 10 g of a compound obtained by the following synthesis method 2-13 as Compound A and 6.2 g of a polyester polyol (trade name: Fantol PL-180, produced by Toho Rika Co., Ltd.) and 2 g of a compound synthesized by the foregoing synthesis method 2 as Compound C were then dissolved in 43 g of this solution, and 0.01 g of 1,8-diazabicyclo[5.4.0]-7-undecene was added to the solution as a catalyst to prepare a monomer solution.

### (Synthesis method 2-13)

In the reaction vessel, 50 g of a polycaprolactone diol (trade name: Praxel L205AL, produced by DAICEL CHEMICAL INDUSTRIES, LTD.) and 34.8 g of tolylene diisocyanate were mixed. To the mixture was then added 0.05 g of dibutyl tin dilaurate as a catalyst. The mixture was then reacted at 80°C to obtain a compound.

### [Example 2-13]

To a solution obtained by mixing a 1/1 (by weight) mixture of tetrapropyl ammonium iodide and trimethylhexyl ammonium bistrifluoro sulfonylimide as a molten salt and a 2/8 (by volume) mixture of acetonitrile and propylene carbonate as a diluent solvent at a weight ratio of 9 :1 was added iodine to prepare a 0.05 M iodine solution. 10 g of a compound (molecular weight: 848) synthesized by the following synthesis method 2-14 as Compound A and 6.2 g of a polyester polyol (trade name: Fantol PL-180, produced by Toho Rika Co., Ltd.) and 2 g of a compound synthesized by the foregoing synthesis method 2-2 as Compound C were then dissolved in 54 g of this solution, and 0.01 g of 1,8-diazabicyclo[5.4.0]-7-undecene was added to the solution as a catalyst to prepare a monomer solution.

### (Synthesis method 2-14)

In the reaction vessel, 50 g of a polycaprolactone diol (trade name: Praxel CD205PL, produced by DAICEL CHEMICAL INDUSTRIES, LTD.) and 34.8 g of tolylene diisocyanate were mixed. To the mixture was then added 0.05 g of dibutyl tin dilaurate as a catalyst. The mixture was then reacted at 70°C to obtain a compound.

### [Example 2-14]

To a solution obtained by mixing 1-butyl-3-methylimidazolium iodide as a molten salt and a 1/5/4 (by volume) mixture of acetonitrile, dimethyl sulfoxide and propylene carbonate as a diluent solvent at a weight ratio of 7 : 3 was added iodine to prepare a 0.05 M iodine solution. 13.5 g of a compound synthesized by the following synthesis method 2-15 as Compound A and 0.5 g of a compound synthesized by the foregoing synthesis method 2-4 as Compound C were then dissolved in 126 g of this solution, and 0.03 g of dibutyl tin dilaurate was added to the solution as a catalyst to prepare a monomer solution.

### (Synthesis method 2-15)

A polydichlorophosphazene obtained by the ring opening polymerization of 3,480 g of hexachlorocyclotriphosphazene, sodium salt of 120 g of a polyethylene glycol having a molecular weight of 200 and sodium salt of 1,080 g of a methoxypolyethylene glycol were subjected to condensation reaction to obtain a polyphosphazene polyol having a molecular weight of 13, 350. To 100 g of the compound thus obtained were then added 0.8 g of tolylene diisocyanate, 0.1 g of dibutyl tin dilaurate as a catalyst and 100 g of methyl ethyl ketone as a diluent solvent. The mixture was then reacted at 80°C. After reaction, methyl ethyl ketone was removed to obtain a compound having a molecular weight of 13,450.

### [Example 2-15]

To a 1/1 (by weight) mixture of 1-hexyl-3-methylimidazolium iodide and 1-butyl-3-methylimidazolium tetrafluoroborate as a molten salt was added iodine to prepare a 0.1 M iodine solution. 8 g of a trimethylolpropane-modified tolylene diisocyanate (trade name: Colonate L, produced by NIPPON POLYURETHANE INDUSTRY CO., LTD.) as Compound A and 2 g of a compound synthesized by the foregoing synthesis method 2-4 as Compound C were then dissolved in 90 g of this solution, and 0.02 g of 1,8-diazabicyclo[5.4.0]-7-undecene was added to the solution as a catalyst to prepare a monomer solution.

### [Example 2-16]

To a solution obtained by mixing N-methyl-N-propylpiperidinium bistrifluoromethane sulfonylimide as a molten salt and a 4/6 (by volume) mixture of propione carbonate and 3-methoxypropionitrile as a diluent solvent at a weight ratio of 85 :15 were added iodine, lithium iodide and 2-n-propylpyridine to prepare a solution having an iodine concentration of 0.05 M, a lithium iodide concentration of 0.1 M and a 2-n-propylpyridine concentration of 0.2 M. A monomer solution was then prepared in the same manner as in Example 2-9 except that this solution was used instead of the solution having an iodine concentration of 0.05 M and a lithium iodide concentration of 0.1 M of Example 2-9 and 0.01 g of a 67 wt-% butanol solution of titanium octylene glycolate was used as a catalyst.

### [Example 2-17]

To a solution obtained by mixing 3-methylpyrazolium tetrafluoroborate as a molten salt and a 2/8 (by volume) mixture of propylene carbonate and 3-methoxypropionitrile as a diluent solvent at a weight ratio of 80 :20 were added iodine, lithium iodide and 4-tert-butylpyridine to prepare a solution having an iodine concentration of 0.05 M, a lithium iodide concentration of 0.1 M and a 4-tert-butylpyridine concentration of 0.5 M. A monomer solution was then prepared in the same manner as in Example 2-9 except that this solution was used instead of the solution having an iodine concentration of 0.05 M and a lithium iodide concentration of 0. 1 M of Example 2-9.

### [Example 2-18]

To hexylmethyl imidazolium iodide were added iodine, 4-tert-butylpyridine and dimethylpropyl imidazolium iodide to prepare a solution having an iodine concentration of 0.5 M, a 4-tert-butylpyridine concentration of 0.2 M and a 1,2-dimethyl-3-propyl imidazolium iodide concentration of 0.3 M. A monomer solution was then prepared in the same manner as in Example 2-9 except that this solution was used instead of the solution having an iodine concentration of 0.05 M and a lithium iodide concentration of 0.1 M of Example 2-9.

### [Example 2-19]

To butylmethyl imidazolium iodide was added iodine and 4-tert-butylpyridine to prepare a solution having an iodine concentration of 0.4 M and a 4-tert-butylpyridine concentration of 0.3 M. A monomer solution was then prepared in the same manner as in Example 2-9 except that this solution was used instead of the solution having an iodine concentration of 0.05 M and a lithium iodide concentration of 0.1 M of Example 2-9.

**Table 2**

| | Conversion efficiency (%) |
|---|---|
| Example 2-1 | 5.9 |
| Example 2-2 | 7.1 |
| Example 2-3 | 4.9 |
| Example 2-4 | 6.9 |
| Example 2-5 | 6.2 |
| Example 2-6 | 7.0 |
| Example 2-7 | 6.8 |
| Example 2-8 | 5.8 |
| Example 2-9 | 5.3 |
| Example 2-10 | 4.2 |
| Example 2-11 | 4.4 |
| Example 2-12 | 6.4 |
| Example 2-13 | 5.1 |
| Example 2-14 | 7.2 |
| Example 2-15 | 4.7 |
| Example 2-16 | 5.6 |
| Example 2-17 | 5.9 |
| Example 2-18 | 4.6 |
| Example 2-19 | 4.8 |

### Industrial Applicability

In the dye-sensitized solar cell of the present invention, since a redox electrolyte is retained in a three- dimensional network structure, the electrolyte leakage, which is a problem with the related art wet type dye-sensitized solar cells, can be depressed, thereby enhancing the safety and the long-term stability. Further, the production process can be simplified, making it easy to control the electrolyte formulation. In particular, since there are used not only an organic volatile solvent but also a non-volatile molten salt, the volatility can be considerably inhibited more than in the case where only the organic solvent is used, further enhancing the long-term stability.

## Claims

1. A dye-sensitized solar cell comprising a transparent substrate, a transparent electrically-conductive membrane formed on the surface of the transparent substrate and an electrically-conductive substrate disposed opposed to the transparent electrically-conductive membrane, wherein a porous semiconductor layer having a dye adsorbed thereto and an electrolyte are provided interposed between the aforesaid transparent electrically-conductive membrane and the aforesaid electrically-conductive substrate,
**characterized in that** the aforesaid electrolyte comprises a molten salt incorporated in a network structure obtained by crosslinking at least one kind of Compound A having isocyanate group with at least one kind of Compound B having amino group.

2. The dye-sensitized solar cell as described in Claim 1, wherein at least one of Compound A and Compound B constituting the aforesaid electrolyte has a polymer structure having a molecular weight of from 500 to 100,000.

3. The dye-sensitized solar cell as described in Claim 2, wherein a part or whole of the polymer structure of the aforesaid Compound A and Compound B comprises one or more selected from the group consisting of polyether, polyester, polycaprolactone, polysiloxane, polyolefin, polybutadiene, polyisoprene, polycarbonate and polyphosphazene.

4. A dye-sensitized solar cell comprising a transparent substrate, a transparent electrically-conductive membrane formed on the surface of the transparent substrate and an electrically-conductive substrate disposed opposed to the transparent electrically-conductive membrane, wherein a porous semiconductor layer having a dye adsorbed thereto and an electrolyte are provided interposed between the aforesaid transparent electrically-conductive membrane and the aforesaid electrically-conductive substrate,
**characterized in that** the aforesaid electrolyte comprises a molten salt incorporated in a network structure obtained by crosslinking at least one kind of Compound A having isocyanate group with at least one kind of Compound C having carboxyl group and/or hydroxyl group,
at least one of Compound A and Compound C constituting the aforesaid electrolyte has a polymer structure having a molecular weight of from 500 to 100,000 and a part or whole of the polymer structure comprises one or more selected from the group consisting of polyether, polyester, polycaprolactone, polysiloxane, polyvinylpyrrolidone, polycarbonate and polyphosphazene.

5. The dye-sensitized solar cell as described in any one of Claims 1 to 4, wherein the aforesaid molten salt is a salt having a melting point of lower than room temperature and/or a salt which stays liquid at room temperature.

6. The dye-sensitized solar cell as described in any one of Claims 1 to 5, wherein the aforesaid molten salt takes part in the production of an oxidation-reduction pair.

7. The dye-sensitized solar cell as described in any one of Claims 1 to 6, wherein the aforesaid molten salt has a cationic structure containing quaternary nitrogen and/or tertiary sulfur.

8. The dye-sensitized solar cell as described in Claim 7, wherein the aforesaid molten salt has one or more selected from the group consisting of ammonium, sulfonium, heterocyclic compound and derivatives thereof as cation.

9. The dye-sensitized solar cell as described in Claim 8, wherein the aforesaid heterocyclic compound is pyridinium, imidazolium, piperidinium or pyrazolium.

10. The dye-sensitized solar cell as described in any one of Claims 1 to 9, wherein the aforesaid molten salt has an iodide ion as anion.
